# EUROPEAN PATENT APPLICATION

(11) **EP 4 726 757 A1**
(43) Date of publication of application: **15.04.2026**
(21) Application number: 24205794.1
(22) Date of filing: 10.10.2024
(51) Int. Cl.: H01H 9/16, H01H 31/00, H01H 31/32

(54) **VISUAL INDICATOR FOR AN ELECTRICAL ASSEMBLY**

(71) Applicant: GE Vernova Technology GmbH, 5400 Baden (CH)
(72) Inventor: MCGOWAN, Paul, Stafford, ST16 1WS (GB); SPIBEY, Neil, Stafford, ST16 1WS (GB)
(74) Representative: Openshaw & Co.

(57) **Abstract**

A visual indicator (110) for an electrical assembly (100), the electrical assembly (100) comprising a housing (120), and an electrical discharge mechanism (130) arranged within the housing (120); the electrical discharge mechanism (130) configured such that movement of the electrical discharge mechanism (130) from a first position to a second position allows electrical components (140) of the electrical assembly (100) to electrically discharge. The visual indicator (110) comprises a display component (112) arranged to display a visual indication external to the housing (120); and a mechanical coupling means (114) configured to mechanically couple the display component (112) to the electrical discharge mechanism (130), such that movement of the electrical discharge mechanism (130) causes movement of the visual indication of the display component (112). When the electrical discharge mechanism (130) is in the first position, the display component (112) displays a first visual indication, and when the electrical discharge mechanism (130) is in the second position, the display component (112) displays a second visual indication.

## Description

### FIELD OF THE INVENTION

The present invention relates to a visual indicator, and more particularly to a visual indicator for an electrical assembly.

### BACKGROUND

An electrical assembly may include an electrical discharge mechanism located within a housing of the electrical assembly. The electrical discharge mechanism may be configured to selectively discharge components of the electrical assembly, by moving from a first position to a second position. By discharging components of the electrical assembly, a user or operator may safely approach or handle the electrical assembly.

### SUMMARY OF THE INVENTION

According to a first aspect of the invention, there is provided a visual indicator for an electrical assembly, the electrical assembly comprising a housing, and an electrical discharge mechanism arranged within the housing; the electrical discharge mechanism configured such that movement of the electrical discharge mechanism from a first position to a second position allows electrical components of the electrical assembly to electrically discharge. The visual indicator comprises a display component arranged to display a visual indication external to the housing; and a mechanical coupling means configured to mechanically couple the display component to the electrical discharge mechanism, such that movement of the electrical discharge mechanism causes movement of the visual indication of the display component. When the electrical discharge mechanism is in the first position, the display component displays a first visual indication, and when the electrical discharge mechanism is in the second position, the display component displays a second visual indication.

The inventors have realised that a visual indicator that is visible from outside the electrical assembly tends to provide a safe means of determining whether an electrical discharging mechanism located within the electrical assembly has been successfully engaged, and thus whether components of the electrical assembly have been successfully discharged. The visual indicator can thus inform a user or operator, that may be at a distance from the electrical assembly, of whether it is safe to approach the electrical assembly. This tends to provide improved safety for users and operators that are required to approach and handle such electrical assemblies.

The display component may comprise a primary display window configured to show the first visual indication, the second visual indication, or combinations thereof. The display component configured in this manner tends to allow for at least three different statuses (e.g., positions of the electrical discharge mechanism) to be displayed.

The primary display window may show substantially only the first visual indication when the electrical discharge mechanism is in the first position. The primary display window only showing the first visual indication tends to be an effective way of displaying that the electrical discharge mechanism is substantially fully in the first position.

The primary display window may show substantially only the second visual indication when the electrical discharge mechanism is in the second position. The primary display window only showing the second visual indication tends to be an effective way of displaying that the electrical discharge mechanism is substantially fully in the second position.

The primary display window may show a portion of the first visual indication and a portion of the second visual indication when the electrical discharge mechanism is moving from the first position to the second position. The primary display window showing a portion of the first visual indication and a portion of the second visual indication tends to be an effective way of displaying that the electrical discharge mechanism is neither fully in the first position nor fully in the second position.

The primary display window may be orientated perpendicularly to a planar side of the electrical assembly housing, such that the primary display window faces in a vertical direction when the electrical assembly is in a normal operating position. Because the primary display window faces a vertical direction, the primary display window can be seen from below the electrical assembly. This tends to improve the visibility of the display component since it can be seen, for example, by operators that may be below the electrical assembly.

The display component may further comprise a peripheral display window configured to show the first visual indication and/or the second visual indication.

The peripheral display window may be arranged perpendicular to the primary display window and parallel to the planar side of the electrical assembly housing, such that the peripheral display window faces in a horizontal direction when the electrical assembly is in a normal operating position. A peripheral display window arranged perpendicular to the primary display window tends to improve the visibility of the display component since it can be seen, for example, by operators that may be at eye level with the electrical assembly.

The primary display window may be larger than the peripheral display window. This tends to allow for the primary display window to be seen from a further distance compared to the peripheral display window.

The display component may comprise a cylindrically shaped housing, and the primary display window may be an aperture in the cylindrically shaped housing.

The display component may further comprise a cylindrically shaped member configured to rotate within the cylindrically shaped housing. A first part of the cylindrically shaped member may include the first visual indication, and a second part of the cylindrically shaped member may include the second visual indication, such that rotation of the cylindrically shaped member causes the primary display window to show the first visual indication, the second visual indication, or combinations thereof.

The cylindrically shaped housing, the aperture, and the cylindrically shaped member allow for the primary display window to show different displays as a result of a rotation of the cylindrically shaped member within the cylindrically shaped housing. Thus, the display component can be effected (i.e., change its display) as a result of a rotational movement or a rotating force.

The mechanical coupling means may comprise an elongate member mechanically coupled to a rotating member of the electrical discharge mechanism. A rotation of the rotating member may cause a rotation of the elongate member. Because the elongate member is coupled to the rotating member, and to the display component, it is able to transfer rotational movement, or a rotating force, from the rotating member to the display component. Thus, the display component can be effected (i.e., change its display) as a result of a rotational movement or a rotating force from the rotating member. An elongate member that is elongate tends to be an effective way of transferring a force or movement from within the electrical assembly to outside a housing of the electrical assembly.

According to a second aspect, there is provided an electrical assembly comprising a housing; electrical components; an electrical discharge mechanism; and a visual indicator according to the first aspect. The electrical discharge mechanism is configured such that movement of the electrical discharge mechanism from a first position to a second position allows electrical components of the electrical assembly to electrically discharge.

Because the electrical assembly comprises electrical components, there is a risk that the electrical components may be charged. There is thus a risk to human life if, for example, the electrical assembly was approached or touched by an operator. A visual indicator arranged in the electrical assembly tends to be an effective way of providing some form of identification, for an operator external to the electrical assembly, of the status (for example, a position) of the electrical components of the electrical assembly.

The electrical components may be one or more energy storage devices. Movement of the electrical discharge mechanism from the first position to the second position may cause the one or more energy storage devices to become short-circuited. An energy storage device is a particularly dangerous electrical component because it may provide a substantial electric shock to an operator if it has not been fully discharged. Short-circuiting an energy storage device is an effective way of discharging the energy storage device. As such, an energy storage device that has been short-circuited tends to be safe to approach. Thus, a visual indication that the energy storage device has been successfully short-circuited tends to be a reliable means of determining whether the electrical assembly is safe to approach.

The electrical discharge mechanism may comprise a discharge plate configured to move in a slidable motion as the electrical discharge mechanism moves from the first position to the second position. A discharge plate that moves in a slidable motion tends to be an effective way of short-circuiting an energy storage device, or even a plurality of energy storage devices, since the discharge plate can provide multiple connections at the same time.

The electrical discharge mechanism may comprise a belt configured to be pulled as the electrical discharge mechanism moves from the first position to the second position. A belt that is pulled tends to be an effective way of short-circuiting an energy storage device, or even a plurality of energy storage devices, since the belt can provide multiple connections at the same time.

The electrical assembly may be configured to operate at a voltage in the range of: 1kV to 30kV. An electric shock of this magnitude is particularly dangerous to life. Generally, an electric shock is more dangerous at higher voltages. Accordingly, the benefits of the visual indicator tend to be even more useful at higher voltages.

The electrical assembly may be configured to operate at a voltage greater than or equal to any one of: 1kV, 2kV, 3kV, 4kV, 5kV, 6kV, 7kV, 8kV, 9kV, 10kV, 11 kV, 12kV, 13kV, 14kV, 15kV, 16kV, 17kV, 18kV, 19kV, 20kV.

According to a third aspect, there is provided a power station comprising the electrical assembly of the second aspect. The power station is connected to a high voltage power transmission network. A power station may normally require operators to be present to manage an operation of the power station. The electrical assembly in the power station presents a risk to life due to a possibility of an electric shock. The severity of this risk is increased to the power station being connected to a high voltage power transmission network. As such, a power station comprising an electrical assembly that comprises the visual indicator is particularly advantageous in improving the safety of the operators in the power station.

According to a fourth aspect, there is provided a power transmission network comprising an AC network; a power transmission medium; and the power station of the third aspect. The power station is generally located between the AC network and the power transmission medium.

It will be appreciated that particular features of different aspects of the invention share the technical effects and benefits of corresponding features of other aspects of the invention.

It will also be appreciated that the use of the terms "first" and "second", and the like, are merely intended to help distinguish between similar features and are not intended to indicate a relative importance of one feature over another, unless otherwise specified.

Within the scope of this application, it is expressly intended that the various aspects, embodiments, examples, and alternatives set out in the preceding paragraphs, and the claims and/or the following description and drawings, and in particular the individual features thereof, may be taken independently or in any combination. That is, all embodiments and all features of any embodiment can be combined in any way and/or combination, unless such features are incompatible.

### BRIEF DESCRIPTION OF THE DRAWINGS

Figure 1 is an isometric front-top view (not to scale) of an example electrical assembly;
Figure 2 is an isometric front-top view (not to scale) of an example visual indicator and part of an electrical discharge mechanism;
Figure 3A is an isometric front-bottom view (not to scale) of the visual indicator in a first configuration;
Figure 3B is an isometric rear-top view (not to scale) of the visual indicator in the first configuration; and
Figure 4 is an isometric front-bottom view (not to scale) of the visual indicator in a second configuration.

### DETAILED DESCRIPTION

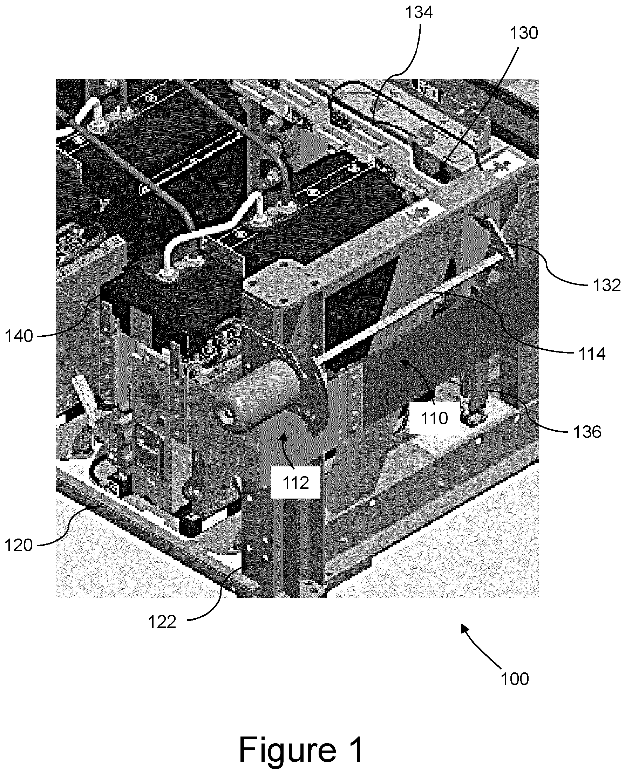

Figure 1 is an isometric front-top view (not to scale) of an example electrical assembly 100 according to a first embodiment.

The electrical assembly 100 comprises a visual indicator 110, a housing 120, an electrical discharge mechanism 130, and a plurality of energy storage devices 140.

The visual indicator 110 comprises a display component 112 and a mechanical coupling means 114. The display component 112 is configured to display a visual indication.

The electrical discharge mechanism 130 comprises a rotating member 132, a discharge plate 134, and an actuator 136. The actuator 136 is mechanically coupled to the rotating member 132. The rotating member 132 is mechanically coupled to the discharge plate 134, such that movement of the actuator causes movement of the rotating member 132 which causes movement of the discharge plate 134.

The mechanical coupling means 114 is mechanically coupled to the rotating member 132, such that movement of the rotating member 132 also causes movement of the mechanical coupling means 114.

The housing 120 is a rigid frame that provides structural support to the electrical assembly 100. The housing 120 is configured to provide structural support for components of the electrical assembly 100 to be safely and securely housed.

The housing 120 is generally constructed of a metallic material, for example steel, and/or aluminium, or combinations of other known metals, or rigid materials, in order to provide rigid and secure structural support. The housing 120 may also be constructed of materials such as plastics, rubber, etc., in order to provide insulative features within the housing 120.

The housing 120 can be used to protect the electrical assembly 100 from external elements such as dust, moisture, chemicals, and physical impact, ensuring reliable operation and preventing damage. The housing 120 also safeguards operators from electrical shock and other hazards by isolating live components that are within the housing 120. Additionally, the housing 120 provides a structured space to organise and secure components of the electrical assembly 100, facilitating maintenance, troubleshooting, and upgrades.

The plurality of energy storage devices 140 are an example of electrical components of the electrical assembly 100. The housing 120 is configured to structurally house the plurality of energy storage devices 140.

The electrical assembly 100 may be rated at a voltage of between 1 kV and 30kV. Preferably, the electrical assembly 100 may be rated at a voltage between 4.6kV and 18.4kV. In this manner, the electrical assembly 100 may be a medium voltage device.

A plurality of the electrical assembly 100 may be connected in series, which may be referred to as a valve. The plurality of the electrical assembly 100, or the valve, may be part of a power converter. The power converter may be rated at a voltage of between 30kV and 525kV, for example at 200kV. In some examples, the power converter may be rated above 525kV. In this manner, the power converter is a high voltage device configured to perform power conversion functionality for use in high voltage applications.

The power converter may be connected to a power transmission network. The power transmission network is an example of a high voltage application. In this manner, the electrical assembly 100 is a medium voltage device configured for use in a high voltage applications, for example the power transmission network.

The plurality of energy storage devices 140 are capacitors with a relatively high capacitor voltage. For example, the capacitors may be rated at a voltage of between 1kV and 5kV each.

The overall size of the electrical assembly 100 may be dictated substantially based on the spatial requirements of the capacitors (for example, size of the capacitors, minimum electrical clearance between the capacitors, insulation requirements of the capacitors, etc.).

The electrical assembly 100 is configured to be mounted to a support structure (alternatively referred to as a rack, a frame, stack, tower, etc.). The housing 120 thus further comprises configurable mounting portions that allow for the electrical assembly 100 to be securely mounted to the support structure.

The electrical assembly 100 may also be a modular unit configured to mechanically couple to itself. The mounting portions may thus be further configured to allow the electrical assembly 100 to securely stack or mount to itself.

Other components are also included in the electrical assembly 100 (not shown) that are used in the mounting or operation of the electrical assembly 100. This may include, for example, wires, connections, terminals, circuit boards, control equipment, additional housings, access points, mounting points, bolts, other electrical components, etc.

The electrical assembly 100 is usually located in a building, for example in a power station. The safety of an operator around or proximal to the electrical assembly 100 during operation, and maintenance, of the electrical assembly 100 is of significant importance, particularly because the electrical assembly 100 operates at voltages where there is danger to life.

In some arrangements, the electrical assembly 100 may be physically located at a minimum height above a floor of the power station. For example, the minimum height may be three or five metres above the floor. The minimum height for the electrical assembly 100 may be calculated based on the voltage of the electrical assembly 100. Thus, a higher voltage electrical assembly 100 may require a greater minimum height compared to a lower voltage electrical assembly 100.

The power station includes a plurality of the electrical assembly 100. The electrical assemblies 100 may be connected in series, which may be referred to as a valve. The electrical assemblies 100 in the valve are mounted on the support structure, vertically above one another. Thus, a power station or a valve may comprise, for example, five electrical assemblies 100 stacked vertically above one another. The lowest electrical assembly 100 may be at a height of, for example, three metres above the ground. The highest electrical assembly 100 may be at a height of ten metres above the ground.

The housing 120 is generally cuboidal in shape. This tends to facilitate manufacture and assembly of the electrical assembly 100. The housing 120 has a planar face 122 that generally faces outwards when the electrical assembly 100 is mounted on the support structure, such that the planar face 122 is visible to an operator in the power station, even when the electrical assembly 100 is mounted on the support structure.

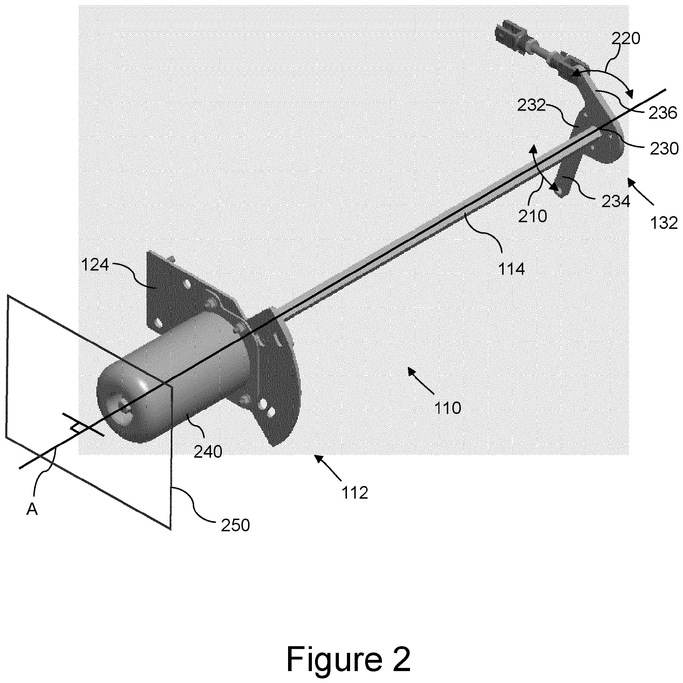

Figure 2 is an isometric front-top view (not to scale) of the visual indicator 110 and the rotating member 132.

The rotating member 132 is a planar component comprising a disc portion 232, a first arm 234, and a second arm 236. The disc portion 232 extends across a first plane 250, and comprises a pivot point 230 at the centre of the disc portion 232. The rotating member 132 is configured to rotate about the pivot point 230 in the first plane 250. The first arm 234 extends tangentially outward, in the first plane 250, from a first point on the circumference of the disc portion 232. The second arm 236 extends tangentially outward, in the first plane 250, from a second point on the circumference of the disc portion 232. The direction of extension of the first arm 234 is at an obtuse angle from the direction of extension of the second arm 234. A clockwise rotation of the rotating member 132 about the pivot point 230 causes the first arm 234 and the second arm 236 to also move in a clockwise direction. An anticlockwise rotation of the rotating member 132 about the pivot point 230 causes the first arm 234 and the second arm 236 to also move in an anticlockwise direction.

An end portion of the first arm 234 is mechanically coupled to the actuator 136. An end portion of the second arm 236 is mechanically coupled to the discharge plate 134.

In this embodiment, the mechanical coupling means 114 is a rod 114. The rod 114 is an example of an elongate member. The rod 114 is mechanically coupled to the rotating member 132 at the pivot point 230, such that rotation of the rotating member 132 about the pivot point 230 also causes the rod 114 to rotate about the pivot point 230, along an axis A.

The display component 112 of the visual indicator 110 comprises a cylindrically shaped housing 240 with a longitudinal side that extends along the axis A. A bracket 124 attaches the display component 112 to the housing 120. In particular, the bracket 124 attaches the display component 112 to the planar face 122 of the housing 120, such a flat face of the cylindrically shaped housing 240, the bracket 124, and the planar face 122 are all in the first plane 250. The axis A is generally perpendicular to the first plane 250. As a result, the curved face of the cylindrically shaped housing 240 is generally perpendicular to the planar face 122.

Each of the pivot point 230, the rod 114, and a centre of the flat face of the cylindrically shaped housing 240 are aligned longitudinally along the axis A.

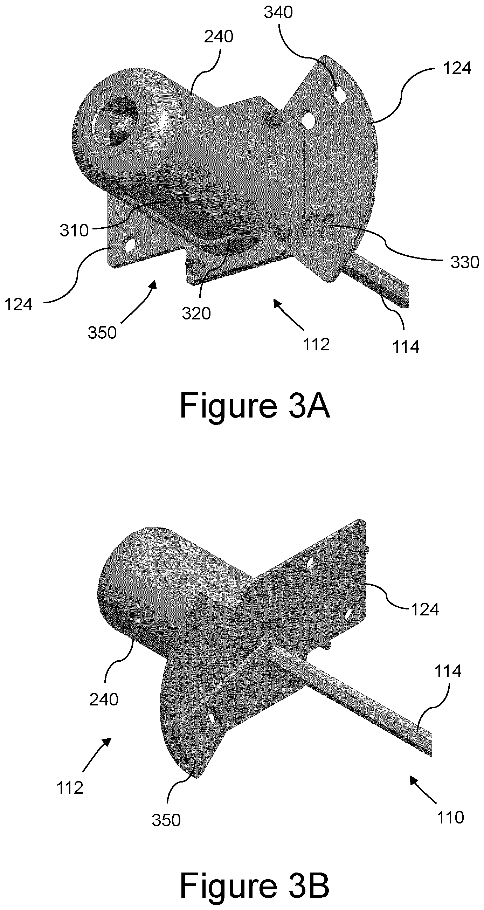

As can be seen in Figure 3A, the display component 112 also comprises a cylindrically shaped member 310, a primary display window 320, and peripheral display windows 330, 340.

The primary display window 320 is a rectangular shaped aperture in the cylindrically shaped housing 240. The primary display window 320 is orientated perpendicularly to the bracket 124 (and thus the planar face 122 of the housing 120). Furthermore, the primary display window 320 faces in a vertical, downward, direction when the electrical assembly 100 is in a normal operating position (i.e., when the electrical assembly 100 is upright, and may be located above the floor), such that the primary display window 320 is visible from underneath the electrical assembly 100.

The cylindrically shaped member 310 is configured to rotate within the cylindrically shaped housing 240. The cylindrically shaped member 310 is mechanically coupled to the rod 114, such that rotation of the rod 114 causes rotation of cylindrically shaped member 310 within the cylindrically shaped housing 240.

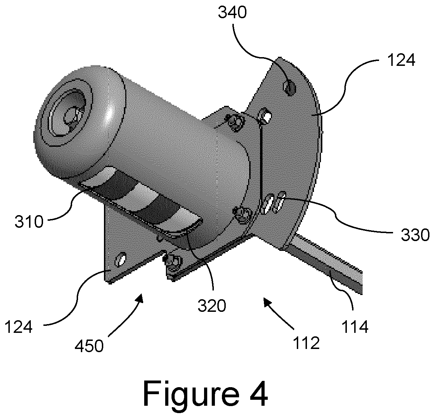

A first part of the cylindrically shaped member 310 includes a first visual indication 350. A second part of the cylindrically shaped 310 member includes a second visual indication 450 (shown in Figure 4). Rotation of the cylindrically shaped member 310 within the cylindrically shaped housing 240 causes the primary display window 320 to show the first visual indication 350, the second visual indication 450, or combinations thereof.

The peripheral display windows 330, 340 include a first peripheral display window 330 and a second peripheral display window 340. The first peripheral display window 330 is an aperture in the bracket 124 at a first radial distance from where the rod 114 intersects the bracket 124. The second peripheral display window 340 is an aperture in the bracket 124 at a second radial distance from where the rod 114 intersects the bracket 124. The first radial distance is different from the second radial distance.

With reference to Figure 3B, the display component 112 further comprises a tab 350. The tab 350 is arranged at an end of the rod 114, at the position where the rod 114 intersects with the bracket 124. In other words, the tab 350 is directly behind the bracket 124. The tab 350 extends across the same plane as the bracket 124. The tab 350 is mechanically coupled to the rod 114, such that rotation of the rod 114 causes rotation of the tab 350 about the rod 114 (i.e., about the axis A), and across the first plane 250, and behind the bracket 124. The tab 350 is mechanically coupled to the rod 114 such that the tab 350 can rotate from a first position to a second position. In the first position, the tab 350 is arranged directly behind the first peripheral display window 330 (as shown in Figure 3B). In the second position the tab 350 is arranged directly behind the second peripheral display window 340.

The tab 350 is an elongate, flat part that extends in a radial direction outwardly from the rod 114. At a first radial length along the tab 350, a first mark is present on a face of the tab 350 between the tab 350 and the bracket 124. At a second radial length along the tab 350, a second mark is present on the face of the tab 350 between the tab 350 and the bracket 124.

The first mark is at substantially the same radial length along the tab 350 as the first peripheral display window 330. As a result, when the tab 350 is in the first position, the first peripheral display window 330 displays the first mark (as shown in Figure 3A).

The second visual indication is at substantially the same radial length along the tab 350 as the second peripheral display window 340. As a result, when the tab 350 is in the second position, the second peripheral display window 340 displays the second mark (as shown in Figure 4).

The tab 350 is configured such that the first mark is displayed in the first peripheral display window 330 when the first visual indication 350 is displayed in the primary display window 320. Similarly, the second mark is displayed in the second peripheral display window 340 when the second visual indication 450 is displayed in the primary display window 320.

As a result, the first visual indication 350 may be comprised of a display in the primary display window 320 and a display (only) in the first peripheral display window 330, whereas the second visual indication 450 may be comprised of a display in the primary display window 320 and a display (only) in the second peripheral display window 340.

In this manner, the display component 112 comprises a peripheral display window 330, 340 configured to show the first visual indication 350 and/or the second visual indication 450.

The peripheral display windows 330, 340 extend across the same plane as the planar face 122 (i.e., in the first plane 250). As result, the peripheral display windows 330, 340 face generally perpendicular to the primary display window 320, and are in a direction that is horizontal when the electrical assembly 100 is in a normal operating position.

The primary display window 320 is larger than either one of the peripheral display windows 330, 340.

The first visual indication 350 is visually different from the second visual indication 450. The visual difference may be a colour difference, and/or a pattern difference.

As discussed above, the electrical assembly 100 is a medium voltage device. As such, the electrical assembly 100 operates at voltages where there is danger to life. However, during periodic intervals, it may be required to perform maintenance on the electrical assembly 100, and thus it becomes necessary for an operator to approach the electrical assembly 100.

In such circumstances, to make the electrical assembly 100 safe, the electrical discharge mechanism 130 is engaged in order to electrically discharge the capacitors of the electrical assembly 100. However, there is a risk that the electrical discharge mechanism 130 may not have successfully engaged.

In an operational example of the invention, first visual indication 350 is a solid green colour (without any patterns) in the primary display window 320, and a solid green mark in the first peripheral display window 330. The first visual indication 350 corresponds to the electrical discharge mechanism 132 being fully engaged. The second visual indication 450 is a red stripped pattern on a white background in the primary display window 320, and a solid red mark in the second peripheral display window 340. The second visual indication 450 corresponds to the electrical discharge mechanism 132 not being engaged. As such, the first visual indication 350 is referred to herein as a safe indication 350, and the second visual indication 450 is referred to herein as a dangerous indication 450.

The operational example begins with the visual indicator 110 in the second configuration (as shown in Figure 4), in which the dangerous indication 450 is displayed in the primary display window 320 and the second peripheral display window 340. An operator proximal to the electrical assembly 100 at floor level can easily see the primary display window 320 of the visual indicator 110, and conclude that the electrical discharge mechanism 132 is not engaged. In particular, because the primary display window 320 is relatively large, it is easily visible from up to ten or more metres away. This allows for an operator that is far away from the electrical assembly 100, and in particular at a safe distance from the electrical assembly 100, to visually see the status of the electrical discharge mechanism 132 without having to approach to electrical assembly 100. This tends to improve the safety of operators nearby the electrical assembly 100.

The electrical discharge mechanism 130 then receives a signal to engage. In response to receiving the signal to engage, the actuator 136 provides an actuation force. The actuation force causes the first arm 234 of the rotating member 132 to move in the first direction 210. Movement of the first arm 234 in this manner causes the body portion 232 of the rotating member 132 to rotate about the pivot 230, which further causes the second arm 236 to move in the second direction 220.

Movement of the second arm 236 in the second direction 220 causes the discharge plate 134 to move in a slidable motion, due to the coupling between the discharge plate 134 and the second arm 236.

The motion of the discharge plate 134 causes first terminals of the capacitors to electrically connect with second terminals. In this example, the second terminals are the opposite terminals of the capacitors. For example, the first terminals may be positive terminals of the capacitors, and the second terminals may be negative terminals of the capacitors. Thus, by connecting the first terminals with the second terminals, the capacitors are short circuited, and any charge built up in the capacitors is electrically discharged.

The inventors have realised that in certain circumstances it may be difficult to determine whether the electrical discharge mechanism 130 has fully engaged. Thus, there is a risk that, if an operator approached the electrical assembly 100 in a situation in which the electrical discharge mechanism 130 had not fully engaged, such that some of the capacitors had not discharged, the operator may be subject to an electric shock.

In the present invention, at the same time as causing movement of the discharge plate 134, the rotational movement of the rotating member 132 also causes rotational movement of the mechanical coupling means 114 about the axis A.

Rotational movement of the mechanical coupling means 114 about the axis A causes rotational movement of the cylindrically shaped member 310 within the cylindrically shaped housing 240, and rotational movement of the tab 350 about the mechanical coupling means 114. This causes the content displayed in the primary display window 320 and the peripheral display windows 330, 340, to change from the dangerous indication 450 towards the safe indication 350.

In a first scenario, the rotating member 132 successfully moves from a first position to a second position, which causes the discharge plate 134 to successfully connect the first terminals and the second terminals, thereby discharging the capacitors of the electrical assembly. Because the rotating member 132 has successfully moved from a first position to a second position, the mechanical coupling means 114, and the cylindrically shaped member 310, also move fully from a first position to a second position. As such, at the end of the first scenario, the primary display window 320 displays substantially only the safe indication 350.

In the first scenario, an operator underneath the electrical assembly 100 at floor level can easily see the status of the electrical discharge mechanism 130, by viewing the display component 112, and conclude that it is safe to approach the electrical assembly 100.

In a continuation of the first scenario, after an operator has approached the electrical assembly 100 and is at eye level or working level to the electrical assembly 100, it may be difficult to check again the status of the primary display window 320. This is because the primary display window 320 generally faces in the vertical, downward, direction. In this scenario, according to the invention, an operator that is at eye level, or at working level, to the electrical assembly 100 can check the status of the electrical discharge mechanism 130 by viewing the peripheral display windows 330, 340. Because the peripheral display windows 330, 340 face horizontally, they are easier to be seen by an operator that is at eye level or at working level with the electrical assembly 100. In this case, the operator will see that the first peripheral display window 330 is showing a solid green mark, and this conclude that the electrical assembly 100 is successfully discharged. This tends to further improve the safety for operators required to approach and handle the electrical assembly 100.

In a second scenario, the rotating member 132 does not move from the first position to the second position, and as such the discharge plate 134 does not connect the first terminals and the second terminals, and thus the capacitors of the electrical assembly are not discharged. This could be as a result of, for example, a fault with the actuator 136 (for example, a signalling error, or a mechanical failure, etc.).

In the second scenario, because the rotating member 132 does not move, the mechanical coupling means 114, the cylindrically shaped member 310, and the tab 350, also do not move. As such, at the end of the second scenario, the primary display window 320 and the peripheral display windows 330, 340 continue to display the dangerous indication 450. In the second scenario, an operator underneath the electrical assembly 100 at floor level can easily see the status of the electrical discharge mechanism 130, by viewing the display component 112, and conclude that the electrical discharge mechanism 130 has not been engaged. Appropriate action can then be taken by the operator. Thus, the safety of the operator tends to be improved.

In a third scenario, the rotating member 132 partially moves from the first position to the second position, which may or may not have caused the discharge plate 134 to connect the first terminals and the second terminals. Thus, the capacitors of the electrical assembly 100 may or may not have been discharged. The partial movement may be because, for example, the rotating member 132 becomes stuck when moving from the first position to the second position.

Partial movement of the rotating member 132 from the first position to the second position causes partial movement of the mechanical coupling means 114, and the cylindrically shaped member 310. As such, at the end of the third scenario, the primary display window 320 displays a combination of both of the safe indication 350 and the dangerous indication 450. The peripheral display windows 330, 340 do not display anything, due to the tab 350 being positioned behind neither of the peripheral display windows 330, 340.

In the third scenario, an operator underneath the electrical assembly 100 at floor level can easily see the status of the electrical discharge mechanism 130 by viewing the display on the display component 112, and conclude that there may be an error or problem with the electrical discharge mechanism 130. Appropriate action can then be taken by the operator. Thus, the safety of the operator tends to be improved.

As can be seen in the above-described scenarios, it is a general principle of the invention that the display component 112 is arranged external to the housing 120 of the electrical assembly 100, such that a visual indication of the position of the discharge plate can be seen from outside of the electrical assembly 100, and in particular from the floor level from underneath the electrical assembly 100.

Thus, because the display component 112 is visible from outside of the housing 120 of the electrical assembly 100, the invention tends to provide a safe means of determining whether the electrical discharging mechanism 130 located within the housing 120 has successfully fully engaged. The display component 112 thus helps inform an operator of whether components of the electrical assembly 100 have been successfully discharged. Based on the display of the display component 112, the operator can make more informed decisions of whether it is safe to approach the electrical assembly 100, or what other actions may need to be taken. This is safer for an operator that is required to approach and handle the electrical assembly 100, for example during maintenance of the electrical assembly 100.

Additionally, the mechanical coupling means 114 being an elongate member allows for movement that may be visually blocked by the housing 120 to be transferred to outside of the housing 120. In this manner, even if an electrical assembly 100 was particularly large, a mechanical coupling means 114 that is an elongate member can still be used to transfer movement or motion from within the housing 120 of the electrical assembly 100 to outside of the housing 120, such that it can be viewed externally.

Although in the above examples the second terminals are opposite terminals of the capacitors, the disclosure should not be limited thereto. In other embodiments, the second terminals are a grounding terminal, or a neutral line terminal, or any other type of terminal configured to short-circuit the electrical components of the electrical assembly 100.

Although in the above examples the electrical discharge mechanism 130 comprises a discharge plate 134, the disclosure should not be limited thereto. In other embodiments, the electrical discharge mechanism 130 may instead comprise a belt mechanism. The belt mechanism may be configured to be pulled, for example by the rotating member; or a cam, pulley, or gear system. The belt mechanism may comprise contacts that allow for the first and second terminals to connect, thereby allowing for the capacitors to electrically discharge. The belt mechanism still comprises a pivot point about which a rotation is performed in order to engage the electrical discharge mechanism and the mechanical coupling means.

Therefore, in general, any electrical discharge mechanism may be used to discharge the capacitors of the electrical assembly 100 which includes movement about a pivot point, and said movement is from a first position to a second position, which causes discharge of components in the electrical assembly 100.

## Claims

1. A visual indicator for an electrical assembly, the electrical assembly comprising a housing, and an electrical discharge mechanism arranged within the housing; the electrical discharge mechanism configured such that movement of the electrical discharge mechanism from a first position to a second position allows electrical components of the electrical assembly to electrically discharge; the visual indicator comprising:
a display component arranged to display a visual indication external to the housing; and
a mechanical coupling means configured to mechanically couple the display component to the electrical discharge mechanism, such that movement of the electrical discharge mechanism causes movement of the visual indication of the display component;
wherein when the electrical discharge mechanism is in the first position, the display component displays a first visual indication, and when the electrical discharge mechanism is in the second position, the display component displays a second visual indication.

2. The visual indicator of claim 1, wherein the display component comprises a primary display window configured to show the first visual indication, the second visual indication, or combinations thereof.

3. The visual indicator of claim 1 or 2, wherein:
the primary display window shows substantially only the first visual indication when the electrical discharge mechanism is in the first position;
the primary display window shows substantially only the second visual indication when the electrical discharge mechanism is in the second position; and
the primary display window shows a portion of the first visual indication and a portion of the second visual indication when the electrical discharge mechanism is moving from the first position to the second position.

4. The visual indicator of claim 2 or 3, wherein the primary display window is orientated perpendicularly to a planar side of the electrical assembly housing, such that the primary display window faces in a vertical direction when the electrical assembly is in a normal operating position.

5. The visual indicator of any one of claims 2 to 4, wherein the display component further comprises a peripheral display window configured to show the first visual indication and/or the second visual indication.

6. The visual indicator of claim 5, wherein the peripheral display window is arranged perpendicular to the primary display window and parallel to the planar side of the electrical assembly housing, such that the peripheral display window faces in a horizontal direction when the electrical assembly is in a normal operating position.

7. The visual indicator of claim 5 or 6, wherein the primary display window is larger than the peripheral display window.

8. The visual indicator of any one of claims 2 to 7, wherein the display component comprises a cylindrically shaped housing, and the primary display window is an aperture in the cylindrically shaped housing.

9. The visual indicator of claim 8, wherein the display component further comprises a cylindrically shaped member configured to rotate within the cylindrically shaped housing, and a first part of the cylindrically shaped member includes the first visual indication, and a second part of the cylindrically shaped member includes the second visual indication, such that rotation of the cylindrically shaped member causes the primary display window to show the first visual indication, the second visual indication, or combinations thereof.

10. The visual indicator of any preceding claim,
wherein the mechanical coupling means comprises an elongate member mechanically coupled to a rotating member of the electrical discharge mechanism, and
wherein a rotation of the rotating member causes a rotation of the elongate member.

11. An electrical assembly comprising:
a housing;
electrical components;
an electrical discharge mechanism; and
a visual indicator according to any of the preceding claims;
wherein the electrical discharge mechanism is configured such that movement of the electrical discharge mechanism from a first position to a second position allows electrical components of the electrical assembly to electrically discharge.

12. The electrical assembly of claim 11, wherein the electrical components are one or more energy storage devices;
wherein movement of the electrical discharge mechanism from the first position to the second position causes the one or more energy storage devices to become short-circuited.

13. The electrical assembly of claims 11 or 12, wherein the electrical discharge mechanism comprises:
a discharge plate configured to move in a slidable motion as the electrical discharge mechanism moves from the first position to the second position; or
a belt configured to be pulled as the electrical discharge mechanism moves from the first position to the second position.

14. The electrical assembly of any one of claims 11 to 13, wherein the electrical assembly is configured to operate at a voltage in the range of: 1kV to 30kV.

15. A power station comprising the electrical assembly of any one of claims 11 to 14; wherein the power station is connected to a high voltage power transmission network.
